# EUROPÄISCHE PATENTSCHRIFT

(11) **EP 1 310 684 B1**
(45) Veröffentlichungstag und Bekanntmachung des Hinweises auf die Patenterteilung: **01.06.2005**
(21) Anmeldenummer: 02023578.4
(22) Anmeldetag: 23.10.2002
(51) Int. Cl.: F16B 13/08, F16B 5/00, F16B 13/06

(54) **Verbindungsglied zwischen zwei Bauteilen**
Connection piece between two members
Elément de liaison entre deux pièces

(30) Priorität: 09.11.2001 DE 20118279 U
(43) Veröffentlichungstag der Anmeldung: 14.05.2003
(73) Patentinhaber: HÄFELE GmbH & Co., 72202 Nagold (DE)
(72) Erfinder: Häsler, Georg, 72202 Nagold (DE)
(74) Vertreter: Kohler Schmid Möbus

(56) Entgegenhaltungen:
- EP-A- 0 940 587
- WO-A-98/40634
- DE-U- 8 505 233
- DE-U- 29 620 985

## Beschreibung

Die Erfindung betrifft ein Verbindungsglied zwischen zwei Bauteilen, insbesondere Platten mit einer Hülse, welche ein oder mehrere schräg in Richtung zum Hülsenende nach außen abstehende schwenkbare Streben aufweist. Eine solche Ausführungsform zeigt bereits das DE-Gbm 85 05 233. Hier wird eine solche Hülse zur Verbindung zwischen zwei im Abstand voneinander angeordneten Bauteilen verwendet. Die Hülse wird dabei zunächst mittels einer Schraube in die Ausnehmungen der zu verbindenden Teile eingedrückt und diese anschliessend in das Endteil eingeschraubt. Dabei wird dann der untere Teil der Hülse gespreizt. Die am oberen Hülsenteil angreifenden Streben ragen beim Einsetzen der Hülse in das erste Bauteil als Anschlag für die Schraube nach innen und können erst im freien Raum zwischen den beiden zu verbindenden Bauteilen durch den Druck der Schraube nach außen schwenken. Die Wirkung der schwenkbaren Streben kann also nur dann genutzt werden, wenn sich zwischen den beiden zu verbindenden Bauteilen ein Freiraum befindet. Dabei ist es möglich, auch bei unterschiedlichen Abständen zwischen den zu befestigenden Bauteilen eine vorbestimmte Setztiefe zu gewährleisten.

Bei der Verbindung von zwei Bauteilen, welche unmittelbar aneinander liegen, werden dagegen zunächst die Ausnehmungen gebohrt und anschließend wird dann entweder das Hülsenunterteil oder das Hülsenoberteil mit eingesetztem Bolzen in die entsprechenden Ausnehmungen des jeweiligen Bauteiles eingesetzt. Danach wird das andere Bauteil angesetzt, indem es mit seiner Ausnehmung auf das andere Hülsenteil aufgeschoben wird. Um siherzustellen, dass der Bolzenkopf immer in die Halte- bzw. Spannvorrichtung eingreifen kann, soll die Bohrungstiefe der Ausnehmungen zumindest für das Hülsenunterteil ein bestimmtes Maß nicht überschreiten. Im praktischen Betrieb lassen sich jedoch zu tiefe Bohrungen nicht immer verhindern, so dass man zur Sicherstellung einer genauen Lage der Hülse in ihren Ausnehmungen einen ringförmigen Anschlag zwischen dem Hülsenunter- und Oberteil vorgesehen hat, wodurch auf jeden Fall ein zu tiefes Einsetzen des Hülsenunterteils vermieden wird. Wenn jedoch die Montage so erfolgen soll, dass zuerst der Bolzenkopf in die Halte- bzw. Spannvorrichtung eingesetzt wird und diese Ausnehmung zu tief gebohrt wurde, wird durch diese ringförmige Anschlagschulter ein Einsetzen des Bolzenkopfes in die Halte- bzw. Spannvorrichtung verhindert, so dass man für diese Fälle eine Hülse ohne Anschlag verwenden muss.

Die Aufgabe der vorliegenden Erfindung dagegen ist es, ein Verbindungsglied der oben beschriebenen Art zur unmittelbaren Befestigung von zwei Bauteilen aneinander zu schaffen, welches unabhängig von der Montageart in gleicher Form Verwendung finden kann. Dies wird erfindungsgemäß dadurch erreicht, dass in der Hülse als Teil des Verbindungsgliedes ein Bolzen mit einem Spreizkonus gelagert ist, welcher Spreizkonus im Gebrauch das Hülsenunterteil in eine Ausnehmung des ersten Bauteils spreizt, wobei der am gegenüberliegenden Ende des Bolzens versehene Bolzenkopf im Gebrauch mit in einer Ausnehmung des zweiten Bauteils angeordneten Halte- oder Spannvorrichtung zusammenwirkt und die Streben an dem an das Hülsenunterteil anschließenden Abschnitt des Hülsenoberteils in Schlitze desselben einschwenkbar sind. Dabei werden die Hülse mit dem Bolzen als eine Einheit eingesetzt. Wenn nunmehr zunächst das Hülsenunterteil eingesetzt wird, dann wirken die ausgestellten Streben am Bauteil als Anschlag, so dass unabhängig von der Tiefe der Ausnehmung eine immer gleichbleibende Lage des Hülsenunterteils innerhalb des entsprechenden Bauteils erreicht wird. Wenn dann anschließend das zweite Bauteil aufgesetzt wird, dann werden die Streben durch die Wandung der Ausnehmung zwangsläufig zur Hülse geschwenkt, so dass die Anschlagwirkung aufgehoben wird.

Erfolgt dagegen zuerst ein Einschieben des Hülsenoberteils, wobei dann der Bolzenkopf in die Halte- bzw. Spannvorrichtung eingesetzt wird, dann werden die Streben ebenfalls zur Hülse geschwenkt. Dabei entfällt wiederum die Anschlagwirkung und man kann unabhängig vom Tiefenmaß der Ausnehmung des anderen Bauteiles das Hülsenunterteil positionieren.

Zwar reicht im Allgemeinen ein Anpressen der Streben an die Hülse bereits aus, um die Anschlagwirkung aufzuheben, jedoch erreicht man dies mit absoluter Sicherheit, wenn die Streben in Schlitze des Hülsenoberteils einschwenkbar sind, wobei sie dann bündig mit der Hülsenoberfläche abschliessen.

Vorzugsweise bestehen die Streben aus dem gleichen Material wie die Hülse. Wenn die Streben aus elastischem Material geformt sind, erübrigen sich besondere Gelenke, beispielsweise Filmscharniere, um die Schwenkbarkeit zu ermöglichen. In an sich bekannter Weise ist das Hülsenunterteil an seinem Außenumfang mit widerhakenförmigen Ringrippen versehen und weist das Hülsenoberteil längsgerichtete Führungs- bzw. Abstandsrippen auf.

Die Zeichnung zeigt ein Ausführungsbeispiel der Erfindung. Es stellen dar:

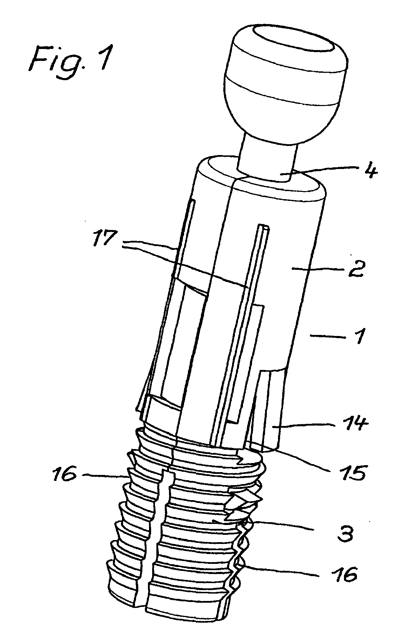

- Figur 1: eine perspektivische Darstellung eines Verbindungsgliedes,
- Figur 2: einen Querschnitt durch ein in ein erstes Bauteil eingesetztes Verbindungsglied,
- Figur 3: eine Darstellung nach Fig. 2 mit angesetztem zweiten Bauteil.

Die Hülse 1 besteht aus dem Hülsenoberteil 2 und dem Hülsenunterteil 3, wobei in der Hülse 1 längsverschiebbar ein Bolzen 4 gelagert ist. Am vorderen Bolzenende 5 sind ein Bolzenkopf 6 und am hinteren Bolzenende 7 ein Spreizkonus 8 vorgesehen.

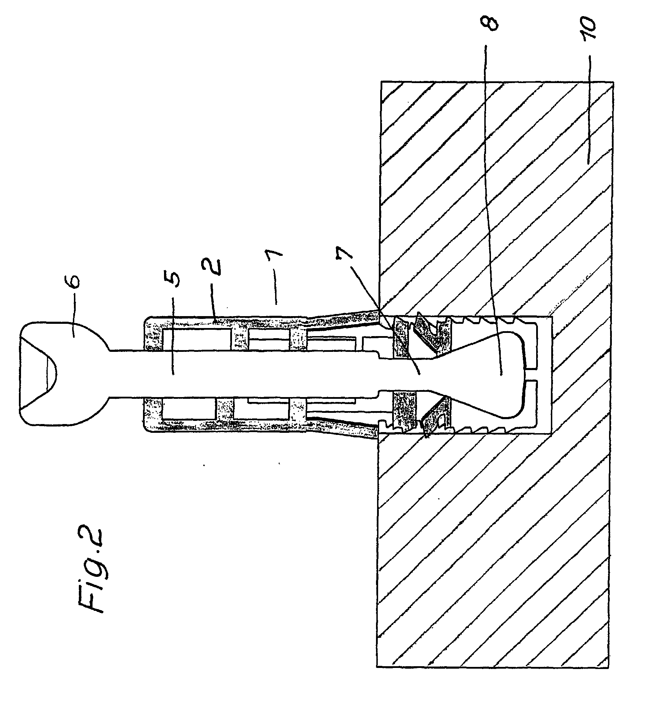

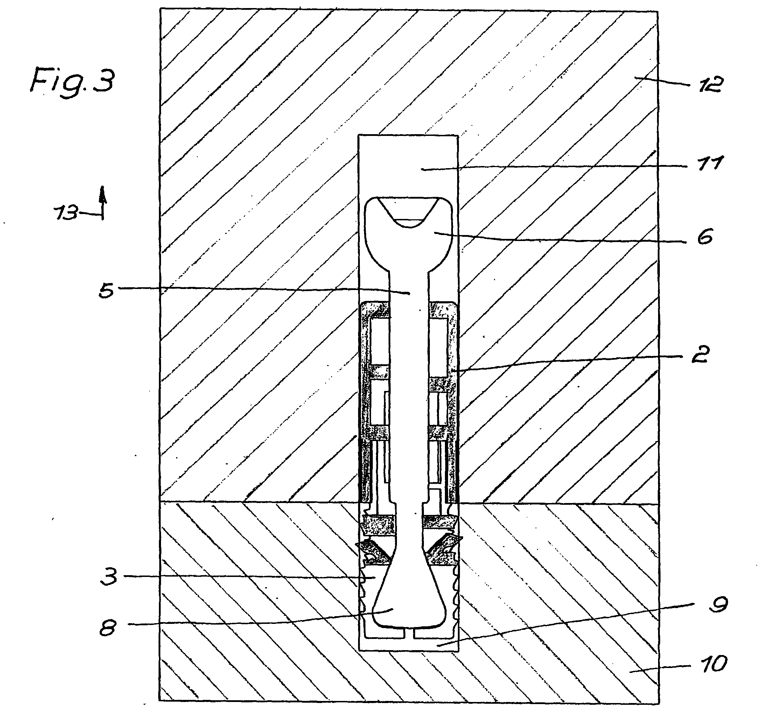

Das mit widerhakenförmigen Ringrippen 16 versehene Hülsenunterteil 3 ist als Spreizhülse ausgebildet und in eine Ausnehmung 9 eines ersten Bauteiles 10 eingesetzt (Fig.2). Das obere Hülsenteil 2 mit seinen längsgerichteten Führungsrippen 17 greift dagegen mit dem Bolzenkopf 6 in die Ausnehmung 11 eines zweiten Bauteiles 12 ein (Fig.3). In diesem Bauteil 12 ist eine nicht dargestellte Spannvorrichtung vorgesehen, mit welcher der Bolzenkopf 6 und damit der Bolzen 5 in Pfeilrichtung 13 verschoben werden kann. Dabei wird dann durch den Spreizkonus 8 des Bolzens 5 das als Spreizhülse ausgebildete Hülsenunterteil 3 gegen die Wandung der Ausnehmung 9 gepresst, so dass sich ein fester Halt ergibt.

Das obere Hülsenteil 2 ist mit schräg nach außen zum Hülsenunterteil 3 gerichteten elastisch schwenkbaren Streben 14 versehen, welche in Schlitze 15 des Hülsenoberteils 2 einschwenkbar sind. Wie Fig. 2 zeigt, wird die Eindringtiefe des Hülsenunterteils 3 in das erste Bauteil 10 durch die als Anschlag wirkenden freien Enden der Streben 14 verhindert. Sobald das zweite Bauteil 12 mit seiner Ausnehmung 11 auf die Hülse 2 geschoben wird, schwenken die Streben 14 in die Schlitze 15, so dass die Anschlagwirkung aufgehoben wird.

Erfolgt die Montage umgekehrt, wobei der obere Hülsenteil 2 mit dem Hülsenkopf 6 zuerst in die Ausnehmung 11 des zweiten Bauteiles 12 eingeschoben wird, dann werden die Streben 14 ebenfalls in die Schlitze 15 geschwenkt und üben damit keinerlei Anschlagwirkung aus. Somit ist sicher gewährleistet, dass der Bolzenkopf 6 in die nicht dargestellte Halte- bzw. Spannvorrichtung eingesetzt werden kann. Erst dann wird das erste Bauteil 10 mit seiner Ausnehmung 9 auf das Hülsenunterteil 3 aufgeschoben und anschließend erfolgt dann der Anzug des Bolzens 5 und die Spreizung der Hülse 3.

## Patentansprüche

1. Verbindungsglied zwischen zwei Bauteilen (10,12), insbesondere Platten, mit einer Hülse (1), welche ein oder mehrere schräg in Richtung zum Hülsenunterteil (3) nach außen abstehende, schwenkbare Streben (14) aufweist, wobei in der Hülse (1) als Teil des Verbindungsgliedes ein Bolzen mit einem Spreizkonus (8) gelagert ist, welcher Spreizkonus (8) im Gebrauch des Hülsenunterteil (3) in eine Ausnehmung (9) des ersten Bauteils (10) spreizt, wobei der am gegenüberliegenden Ende des Bolzens (4) versehene Bolzenkopf (6) in Gebrauch mit in einer Ausnehmung (11) des zweiten Bauteils (12) angeordneten Halte- oder Spannvorrichtung zusammenwirkt und die Streben (14) an dem an das Hülsenunterteil (3) anschließenden Abschnitt des Hülsenoberteils (2) in Schlitze (15) desselben einschwenkbar sind.

2. Verbindungsglied nach Anspruch 1, **dadurch gekennzeichnet, dass** die freien Enden der Streben (14) als Anschläge für die Eindringtiefe des Hülsenunterteils (3) in seine Ausnehmung (9) ausgebildet sind.

3. Verbindungsglied nach einem oder beiden der vorhergehenden Ansprüche, **dadurch gekennzeichnet, dass** die Streben (14) aus dem gleichen Material wie die Hülse (1) bestehen.

4. Verbindungsglied nach einem oder mehreren der vorhergehenden Ansprüche, **dadurch gekennzeichnet, dass** die Streben (14) aus elastischem Material bestehen.

5. Verbindungsglied nach einem oder mehreren der vorhergehenden Ansprüche, **dadurch gekennzeichnet, dass** das Hülsenunterteil (3) an seinem Außenumfang widerhakenförmige Ringrippen (16) aufweist.

6. Verbindungsglied nach einem oder mehreren der vorhergehenden Ansprüche, **dadurch gekennzeichnet, dass** das Hülsenoberteil (2) mit längsgerichteten Führungsrippen (17) versehen ist.

## Claims

1. Connection member between two components (10, 12), in particular plates, with a sleeve (1) which comprises one or more pivotable struts (14) which protrude obliquely outwards in the direction of the sleeve lower part (3), wherein a bolt with an expanding cone (8) is mounted in the sleeve (1) as part of the connection member, which expanding cone (8) expands when the sleeve lower part (3) is in use into a recess (9) of the first component (10), wherein the bolt head (6) provided at the opposite end of the bolt (4) co-operates during use with a retaining or clamping device disposed in a recess (11) of the second component (12), and the struts (14) at the portion of the sleeve upper part (2) which adjoins the sleeve lower part (3) can be pivoted into slots (15) of the upper part.

2. Connection member according to Claim 1, **characterised in that** the free ends of the struts (14) are formed as stops for the depth of penetration of the sleeve lower part (3) into its recess (9).

3. Connection member according to one or both of the preceding Claims, **characterised in that** the struts (14) consist of the same material as the sleeve (1).

4. Connection member according to one or more of the preceding Claims, **characterised in that** the struts (14) consist of resilient material.

5. Connection member according to one or more of the preceding Claims, **characterised in that** the sleeve lower part (3) comprises barb-shaped annular ribs (16) at its outer circumference.

6. Connection member according to one or more of the preceding Claims, **characterised in that** the sleeve upper part (2) is provided with guide ribs (17) oriented in the longitudinal direction.

## Revendications

1. Organe de liaison entre deux éléments structurels (10, 12), en particulier des panneaux, avec une douille (1) qui présente une ou plusieurs jambes pivotantes (14) faisant saillie vers l'extérieur en oblique en direction de la partie inférieure (3) de la douille, sachant qu'un boulon pourvu d'un cône d'écartement (8) est monté dans la douille (1) en tant que pièce de l'organe de liaison, le cône d'écartement (8) écartant en utilisation la partie inférieure (3) de la douille dans un évidement (9) du premier élément structurel (10), sachant que la tête de boulon (6) prévue à l'extrémité opposée du boulon (4) coopère en utilisation avec un dispositif de maintien ou de serrage disposé dans un évidement (11) du deuxième élément structurel (12), et que les jambes (14), prévues sur le tronçon de la partie supérieure (2) de la douille qui se raccorde à la partie inférieure (3) de la douille, peuvent être rentrées par pivotement dans des fentes (15) de ce tronçon.

2. Organe de liaison selon la revendication 1, **caractérisé en ce que** les extrémités libres des jambes (14) sont conçues comme butées pour la profondeur de pénétration de la partie inférieure (3) de la douille dans son évidement (9).

3. Organe de liaison selon la revendication 1 ou 2, **caractérisé en ce que** les jambes (14) sont constituées du même matériau que la douille (1).

4. Organe de liaison selon une ou plusieurs des revendications précédentes, **caractérisé en ce que** les jambes (14) sont constituées d'un matériau élastique.

5. Organe de liaison selon une ou plusieurs des revendications précédentes, **caractérisé en ce que** la partie inférieure (3) de la douille présente sur sa circonférence extérieure des nervures annulaires (16) en forme de barbes.

6. Organe de liaison selon une ou plusieurs des revendications précédentes, **caractérisé en ce que** la partie supérieure (2) de la douille est pourvue de nervures de guidage (17) orientées longitudinalement.
